# EUROPEAN PATENT APPLICATION

(11) **EP 2 277 933 A1**
(43) Date of publication of application: **26.01.2011**
(21) Application number: 09166039.9
(22) Date of filing: 21.07.2009
(51) Int. Cl.: C08G 18/08, C09D 175/04, C09D 167/00

(54) **Water-borne binders for primer-surfacer coating compositions**

(71) Applicant: Cytec Surface Specialties Austria GmbH, 8402 Werndorf (AT)
(72) Inventor: Feola, Roland, Dr., 8045 Graz (AT); Kuttler, Ulrike, 8302 Vasoldsberg (AT)
(74) Representative: Deckers, Hellmuth Alexander

(57) **Abstract**

The invention relates to water-borne coating binders **ABC** comprising a mixture of a curing agent **C** and a reaction product **AB** made by at least partial esterification of a hydroxyl group-containing polyester **A** and an acid groups-containing polyurethane **B, characterised in that** each of **A** and **B** comprise not more than 20 % of the amount of substance of their educts **A1, A2, B1,** and **B2,** of molecules comprising aromatic structures, to a method of their preparation, and a method of use thereof to formulate primer-surfacer coating compositions.

## Description

### Field of the invention

This invention relates to water-borne binders for primer-surfacer coating compositions. More specifically, it relates to stoving binders for use in these compositions, and to a process of making these.

### Background Art

Stoving binders for primer-surfacer coating compositions, particularly for automotive OEM applications, have been known from the patent literature. Such binders have been described, i. a., in the patents DE 4142 816 C1, and EP 1 199 342 B1.

In DE 41 42 816 C1, condensation products of carboxyl groups-containing polyurethanes and hydroxyl groups-containing polyesters are described in general terms, while the examples only mention acidic polyurethanes derived from toluylene diisocyanate, and hydroxyl group-containing polyesters derived from aromatic di- and trifunctional carboxylic acids, viz. isophthalic acid and trimellithic acid. Likewise, in EP 1 199 342 B1, condensation products of carboxyl groups-containing polyurethanes and hydroxyl groups-containing polyesters are described in general terms, while the examples only mention acidic polyurethanes derived from toluylene diisocyanate, and hydroxyl group-containing polyesters derived from aromatic di- and trifunctional carboxylic acids, viz. isophthalic acid and trimellithic acid.

### Subject of the Invention

It has been found that such condensation products comprising moieties derived from aromatic educts (starting materials), while providing excellent properties with respect to levelling, hardness, stone chip resistance, and mass fraction of solids in the paint, are prone to embrittlement during stoving, particularly at elevated stoving temperatures, or during prolonged exposure to high temperatures. In the usual processing conditions of car bodies coated with primer-surfacers based on such condensation products, it can not always be excluded that local temperatures, or residence times at elevated temperature, may rise to values higher than appropriate, because fast curing and therefore elevated temperatures are desired, which elevated temperatures accelerate curing. As there is, however, danger of embrittlement upon the application of higher curing temperatures or prolonged exposure to elevated temperatures, the curing process becomes difficult to control.

It is therefore the object of this invention to provide a binder system based on condensation products of carboxyl group-containing polyurethanes and hydroxyl group-containing polyesters that does not show embrittlement upon curing at elevated temperatures, or upon prolonged exposure to elevated temperatures, and which can be cured to a coating film of improved hardness and stone-chip resistance. Curing at elevated temperatures and prolonged exposure to elevated temperatures are collectively referred to as "overbaking" in the technical community. Resistance to overbaking has become one of the primary requirements in OEM car body coating.

This object has been achieved by providing water-reducible, i. e. water-dilutable or water-dispersible, condensation products **AB** from polyurethanes **B** having carboxyl groups in their molecules, and hydroxyl groups-containing polyesters **A,** wherein both **A** and **B** comprise, individually, not more than 20 % of the amount of substance of their educts of molecules comprising aromatic structures. A molecule is said to comprise an aromatic structure in the context of this invention if it comprises radicals derived from benzene or naphthalene or other aromatic or heteroaromatic molecules, which radicals are obtained by removing at least one hydrogen atom from any said aromatic or heteroaromatic molecule. The condensation products according to the present invention can withstand temperatures of up to 200 °C without embrittlement or other deterioration while preserving the favourable properties of binder resins for primer-surfacers according to the state of the art such as stone-chip resistance, and they also show a reduced propensity to yellowing which is an additional requirement presently having gained attention of car manufacturers due to the trend of using fillers which are formulated in the same colour as the topcoat. This has grown particularly important for light car body colours.

### Detailed Description of the Preferred Embodiments

It is also preferable, in accordance with the present invention, to use curing agents **C** which are selected from the group consisting of capped aliphatic or cycloaliphatic polyfunctional isocyanates **C1** and from aminoplast resins **C2,** particularly those having a high degree of alkylolation, particularly, methylolation, or alkoxyalkylation, expressed as the ratio of the amount of substance of N-alkylol groups or N-alkoxyalkyl groups, n(-N-CHR-OR') where R and R' may independently be H, or linear or branched alkyl having from 1 to 8 carbon atoms, and R may also be the residue of an oxo compound having from 1 to 8 carbon atoms, to imino groups, ***n***(-NH-), of at least 5 mol / 1 mol. Particularly preferably, this ratio is at least 5.2, and most preferred, at least 5.3. Residue in the context of this invention means an organic monovalent radical obtained by removing one hydrogen atom from an organic compound. Particularly preferred is the use of hexamethyoxyalkyl or hexamethoxymethyl melamine.

It is also possible to use an alkoxycarbonylaminotriazine **C3** as crosslinker, such as tris-butoxycarbonylaminotriazine, optionally in combination with crosslinkers **C2.** Especially good results have been obtained with purely aliphatic or cycloaliphatic polyfunctional isocyanates **C1,** or with mixtures of two or more polyfunctional isocyanates comprising a mass fraction of not more than 10 % of such polyfunctional isocyanates that comprise an aromatic structure.

In the context of the present invention, it is preferred to use exclusively, or to an extent corresponding to a mass fraction of at least 80 %, particularly preferably of 90 % or more, of the crosslinkers used, purely aliphatic or cycloaliphatic polyfunctional isocyanates.

In the synthesis of the condensation products **AB,** it is preferred to react components A and **B** in a mass ratio *m*(A) : *m*(B) of from 90 : 10 to 30 : 70. Synthesis of such condensation products **AB** is preferably conducted by esterifying the hydroxyl groups-containing polyester A and the carboxylic acid groups-containing polyurethanes **B** at a temperature of from 90 °C to 160 °C, preferably under removal of the water formed in the condensation reaction, until the condensation product **AB** has reached a value of the Staudinger index of preferably from 10 cm³/g to 20 cm³/g, and an acid number of preferably from 30 mg/g to 50 mg/g. After at least partial neutralisation of the remaining carboxyl groups (under conversion of approximately from 50 % to 100 % of these acid groups to acid anion groups), the condensation products **AB** are dispersible in water.

A substance is referred to as being "dispersible in water" in the context of this invention if a dispersion in water of the said substance with a mass fraction of that said substance in the dispersion of up to 40 % exhibits no phase separation after storage of that dispersion at room temperature (21 °C) for a period of six weeks.

The condensation products **AB** preferably comprise a mass fraction of at most 10 % of aromatic moieties, this mass fraction being calculated by dividing the sum of the masses or aromatic (mono-, di- or poly-)radicals in the condensation product **AB** (such as, in the case of terephthalic acid, the residue C₆H₄) by the total mass of the condensation product **AB,** particularly preferably a mass fraction of at most 7 %, and especially preferred, of at most 5 %. The best results have been realised when the mass fraction of aromatic moieties did not exceed 2 %.

Useful polyester resins **A** are made in a known manner by polycondensation of multifunctional alcohols **A1** and multifunctional acids **A2,** where at least a part of these may be replaced by hydroxy acids **A21.** Kind and amounts of educts **A1, A2,** and **A21** have to be chosen in a way that the reaction products, viz., the polyesters **A,** have a sufficient number of hydroxyl groups (for later reaction with the curing agent).

Preferably, the hydroxyl number of these polyesters **A** is from 50 mg/g to 500 mg/g. The desired acid number of these polyesters **A** is preferably from 15 mg/g to 80 mg/g, particularly preferably from 20 mg/g to 50 mg/g. Their Staudinger index is preferably from 5 cm³/g to 15 cm³/g, particularly preferred from 7 cm³/g to 13 cm³/g.

Only selected aliphatic or cycloaliphatic alcohols having at least two hydroxyl groups and from 2 to 20 carbon atoms per molecule may preferably be used as alcohols **A1,** particularly preferably 1,4-butanediol, 1,2-butanediol, 1,3-propanediol, 1,2-propanediol, 1,6-hexanediol, 1,2- or 1,4-dimethylol cyclohexane, trimethylol propane, and pentaerythritol. It is preferred to use aliphatic or cycloaliphatic alcohols having two hydroxyl groups; a mass fraction of up to 10 % of the alcohols may, however, have three or more hydroxyl groups.

Only selected aliphatic or cycloaliphatic acids having at least two acid groups and from 2 to 20 carbon atoms per molecule may preferably be used as polyfunctional acids **A2,** the following carboxylic acids having proved to be particularly suited as polyfunctional acids A2: adipic acid, glutaric acid, succinic acid, 1,2-, 1,3-, and 1,4-cyclohexanedicarboxylic acid, hexahydrophthalic anhydride, as well as aliphatic hydroxy acids such as lactic acid, hydroxybutyric acid, hydroxyvaleric acid, hydroxy caproic acid, hydroxy- and dihydroxy-succinic acid.

The polyurethanes **B** preferably have a Staudinger index of from 5 cm³/g to 15 cm³/g, particularly preferably from 7 cm³/g to 12 cm³/g. Their hydroxyl number is preferably from 0 mg/g to 110 mg/g, and particularly preferably up to 90 mg/g. Their acid number is preferably from 50 mg/g to 180 mg/g, particularly preferably from 60 mg/g to 150 mg/g.

Carboxy functional polyurethane resins **B** can be prepared by reaction of selected aliphatic monoalcohols (chain stoppers) **B1,** and selected aliphatic and cycloaliphatic diols (chain extenders) **B2,** hydroxyalkanoic acids **B31** having one carboxylic acid group and one hydroxyl group (chain stoppers) such as 4-hydroxybutyric acid, or two or more hydroxyl groups (dihydroxyalkanoic acids **B32,** such as dimethylol propionic acid, chain extenders). Among the latter, it is preferred to use dihydroxymonocarboxylic acids such as dimethylol acetic acid, dimethylol propanoic and butyric acids. Further reactants include polyfunctional isocyanates **B4** which are preferably exclusively cycloaliphatic, such as isophorone diisocyanate, bis(4-isocyanatomethyl)-cyclohexane, bis(4-isocyanatocyclohexyl)-methane (e. g., ®Desmodur W, Bayer Material Science AG).

The alcohols are preferably selected from the group consisting of aliphatic and cycloaliphatic monoalcohols **B1** having from 1 to 14 carbon atoms such as methoxyethanol, 4-methoxybutanol, and 2-ethylhexanol, diethylene glycol monoethyl ether, diethylene glycol monobutyl ether, triethylene glycol monoethyl ether, triethylene glycol monobutyl ether, hexanol and homologues thereof, and diols **B2** having from 2 to 1000 carbon atoms such as 1,2-propanediol, 1,2-butanediol, 1,4-butanediol, 1,2- and 1,4-dimethylol cyclohexane, 1,6-hexanediol, aliphatic polycarbonate diols, aliphatic polyester diols as known in the art, aliphate polyamide diols, and polycaprolactone diols (®Placcel 500 series, IMCD Group B.V.).

The condensation product **AB** is made in an esterification reaction wherein carboxyl groups of the polyurethane component **B** react with hydroxyl groups of the polyester component **A** in an esterification reaction, under formation of water, and formation of an ester bond between two molecules of components **A** and **B.** The condensation product preferably has an acid number of from 15 mg/g to 60 mg/g, with particular preference of from 20 mg/g to 40 mg/g, and a hydroxyl number of from 100 mg/g to 250 mg/g, with particular preference of from 150 mg/g to 200 mg/g. The condensation reaction can be accelerated if the water formed in the esterification reaction is removed from the reaction mixture by an entrainment agent. Another possibility is to form reaction products of the hydroxyl groups-containing polyester **A** and the carboxyl groups-containing polyurethane if the latter is made from a mixture of polyfunctional isocyanates and partially half-capped isocyanates, thereby generating a polyurethane **B** that has carboxyl groups derived from the hydroxyalkanoic acids, and capped isocyanate groups derived from the partially capped polyfunctional isocyanates. Components **A** and **B** can the be reacted under formation of a urethane bond and removal of the capping agent, under formation of a urethane-coupled reaction product **AB.**

The invention is further illustrated by the following examples which are not to be construed as limiting.

In the examples, as well as in the introductory portion of the specification, the following standards are used:
The acid number is defined, according to DIN EN ISO 3682 (DIN 53 402), as the ratio of that mass ***m***_{KOH} of potassium hydroxide which is needed to neutralise the sample under examination, and the mass ***m***_{B} of this sample, or the mass of the solids in the sample in the case of a solution or dispersion; its customary unit is "mg/g".

The hydroxyl number is defined according to DIN EN ISO 4629 (DIN 53 240) as the ratio of the mass of potassium hydroxide ***m***_{KOH} having the same number of hydroxyl groups as the sample, and the mass ***m***_{B} of that sample (mass of solids in the sample for solutions or dispersions); the customary unit is "mg/g".

The molar mass of a substance is denoted by the usual symbol M, its SI unit is "kg/mol" or customary multiples thereof.

The physical quantity formerly referred to as "limiting viscosity number", properly named "Staudinger-Index" *J*_{g} according to DIN 1342, part 2.4, is the limiting value of the Staudinger function *J*ᵥ for decreasing concentration and shear gradient, wherein ***J***ᵥ stands for the relative change in viscosity divided by the mass concentration β_{B} = ***m***_{B}/**V** of the solute B (having a mass ***m***_{B} of the solute in a volume ***V*** of the solution), viz., ***J***ᵥ = (ηᵣ -1) / β_{B}. The relative change in viscosity ηᵣ - 1 is calculated as ηᵣ - 1 = (η - ηₛ) / η_{s,}. The relative viscosity ηᵣ is the ratio of the viscosity η of the solution under consideration, and the viscosity ηₛ of the pure solvent. The physical significance of the Staudinger index is that of a specific hydrodynamic volume of the solvated polymer coils at infinite dilution in the state of rest. The unit generally accepted for *J* is "cm³/g"; formerly often "dl/g". The solvent employed in these examples is dimethyl formamide.

### Examples

### Example 1 Preparation of the hydroxy functional Polyester Aa

34.2 g (0.45 mol) of 1,2-propanediol, 11.8 g (0.10 mol) of 1,6-hexanediol, 13.4 g (0.10 mol) of trimethylolpropane, 21.9 g (0.15 mol) of adipic acid, 25.9 g (0.17 mol) of tetrahydrophthalic anhydride and 9.6 g (0.05 mol) of trimellithic anhydride were charged into a three-neck glass vessel equipped with a stirrer and a reflux condenser. This mixture was heated to 210 °C with a rate of 10 K/h under a nitrogen blanket. Esterification was continued with separation of the water formed until an acid number of less than 25 mg/g was reached. The Staudinger index measured in a solution of N,N-dimethylformamide at 23 °C was 11.5 cm³/g. A hydroxyl number of 341 mg/g was determined on a sample drawn.

The composition of further polyesters made in accordance with this procedure is listed in table 1. Polyester Ag is a comparative product having lower acid number than claimed (14 mg/g). The following abbreviations are used:

| | | | |
|---|---|---|---|
| BG: | ethylene glycol butyl ether | DMBS: | dimethylolbutyric acid |
| EG: | ethylene glycol ethyl ether | HBS: | 4-hydroxybutyric acid |
| BD: | 1,4-butanediol | APS: | adipic acid |
| CHD: | 1,4-dimethylolcyclohexane | THPSA: | tetrahydrophthalic anhydride |
| HEX: | 1-hexanol | TMSA: | trimellithic anhydride |
| CLD: | polycaprolactonediol 550 (*M* = 550 g/mol) | BSS: | succinic acid |
| PD: | 1,2-propanediol | HHPSA: | hexahydrophthalic anhydride |
| HD: | 1,6-hexanediol | CHDS: | 1,4-cyclohexanedicarboxylic acid |
| TMP: | trimethylolpropane | IPDI: | isophorone diisocyanate |
| NPG: | neopentyl glycol | HDI: | hexamethylene diisocyanate |
| PY: | pentaerythritol | BICM: | bis(4-isocyanatocyclohexyl)methane |
| DMPS: | dimethylolpropionic acid | BIMC: | bis(4-isocyanatomethyl)cyclohexane |

**Table 1 Polyesters Aa to Af and Ag (Comparison)**

| Polyester | Alcohols* | Acids* | Water formed in mol\|g | Yield of solid resin in g | Staudinger index in cm³/g | Hydroxyl number in mg/g | Acid number in mg/g |
|---|---|---|---|---|---|---|---|
| Aa | PD\|0.45\|34.2 | APS\|0.15\|21.9 | 0.52\|9.3 | 107.5 | 11.5 | 341 | 25 |
| | HD\|0.1\|11.8 | THPSA\|0.17\|25.9 | | | | | |
| | TMP\|0.1\|13.4 | TMSA\|0.05\|9.6 | | | | | |
| Ab | NPG\|0.3\|31.2 | APS\|0.16\|23.4 | 0.74\|13.3 | 97.7 | 12.7 | 194 | 22 |
| | PG\|0.1\|7.6 | IPS\|0.16\|26.6 | | | | | |
| | TMP\|0.1\|13.4 | TMSA\|0.05\|9.6 | | | | | |
| Ac | BD\|0.31\|27.9 | BSS\|0.1\|11.8 | 0.39\|7.0 | 97.6 | 7.5 | 343 | 30 |
| | PG\|0.1\|7.6 | HHPSA\|0.25\|38.5 | | | | | |
| | TMP\|0.14\|18.8 | | | | | | |
| Ad | HD\|0.3\|35.4 | BSS\|0.12\|14.2 | 0.39\|7.0 | 107.4 | 7.3 | 325 | 34 |
| | CHD\|0.12\|17.3 | HHPSA\|0.22\|33.9 | | | | | |
| | PY\|0.1\|13.6 | | | | | | |
| Ae | HD\|0.42\|49.6 | APS\|0.07\|10.1 | 0.49\|8.8 | 105.6 | 8.5 | 127 | 24 |
| | TMP\|0.05\|6.7 | HHPSA\|0.25\|38.5 | | | | | |
| | | TMSA\|0.05\|9.6 | | | | | |
| Af | HD\|0.32\|37.8 | CHDS\|0.15\|25.8 | 0.59\|10.6 | 105.3 | 9.1 | 322 | 30 |
| | PD\|0.1\|7.6 | APS\|0.15\|21.9 | | | | | |
| | TMP\|0.12\|16.1 | DMPS\|0.05\|6.7 | | | | | |
| Ag | HD\|0.3\|35.4 | BSS\|0.12\|14.2 | 0.43\|7.7 | 106.7 | 9.5 | 309 | 14 |
| | CHD\|0.12\|17.3 | HHPSA\|0.22\|33.9 | | | | | |
| | PY\|0.1\|13.6 | | | | | | |

| | | | | | | | |
|---|---|---|---|---|---|---|---|
| *: kind \| amount of substance in mol \| mass in g | | | | | | | |

### Example 2 Preparation of the carboxy-functional Polyurethane Ba

A mixture of 670 g (5.0 mol) of dimethylolpropionic acid and 1300 g of N-methylpyrrolidone was heated under stirring to 110 °C. A reaction product of 1572 g (6.0 mol) of bis(4-isocyanatocyclohexyl)methane and 236 g (2.0 mol) of ethylene glycol monobutyl ether having a mass fraction of isocyanate groups ***m*** (NCO) / ***m*** = 23.3 % where ***m*** is the mass of the reaction product, and ***m***(NCO) is the mass of isocyanate groups, was added to the solution formed within two hours. The reaction mass was held at 110 °C for a further two hours to complete the reaction of the isocyanate groups until no more isocyanate groups could be detected, and was then diluted with N-methylpyrrolidone to a mass fraction of solids of 60 %. The product obtained had an acid number of 113 mg/g and a Staudinger index of 10.9 cm³/g as measured in N,N-dimethylformamide at 23 °C.

The composition of further polyurethanes made in accordance with this procedure is listed in table 2.

**Table 2 Polyurethanes Ba to Bf**

| Polyurethane | Alcohols* | Acids* | Diisocyanate* | Yield of solid resin in g | Staudinger index in cm³/g | Hydroxyl number in mg/g | Acid number in mg/g |
|---|---|---|---|---|---|---|---|
| Ba | BG\|2.0\|236 | DMPS\|5.0\|670 | BICM\|6.0\|1572 | 2478 | 10.9 | 0 | 113 |
| Bb | EG\|1.0\|90 | DMBS\|2.0\|296 | IPDI\|3.0\|666 | 1142 | 6.6 | 49 | 98 |
| | BD\|1.0\|90 | | | | | | |
| Bc | BD\|2.0\|180 | DMPS\|1.5\|201 | IPDI\|3.0\|666 | 1322 | 7.8 | 85 | 63 |
| | CLD\|0.5\|275 | | | | | | |
| Bd | HEX\|0.5\|51 | DMPS\|5.0\|670 | BIMC\|6.0\|1164 | 2020 | 9.8 | 41 | 139 |
| | BD\|1.5\|135 | | | | | | |
| Be | EG\|2.0\|180 | DMPS\|2.0\|268 | HDI\|2.0\|336 | 1575 | 8.5 | 0 | 71 |
| | CHD\|0.5\|72 | | IPDI\|2.9\|444 | | | | |
| | CLD\|0.5\|275 | | | | | | |
| Bf | EG\|1.0\|90 | HBS\|1.0\|104 | IPDI\|3.0\|666 | 1219 | 7.2 | 0 | 92 |
| | CHD\|0.8\|115 | DMPS1.0\|134 | | | | | |
| | CLD\|0.2\|110 | | | | | | |

### Example 3 Preparation of Condensation Products AB

Polyesters A from Example 1 and polyurethanes B from Example 2 were mixed according to the mass ratios listed in table 3, and held at 160 °C for a time sufficient to reach both the desired Staudinger index of from 10 cm³/g to 20 cm³/g, and an acid number of from 30 mg/g to 50 mg/g. The reaction mass was checked from time to time by partially (consumption of about 80 % of the acid groups) neutralising a sample drawn with diethanolamine, and checking for miscibility with water (water-miscible means that there is no phase separation after 30 days of storage of a solution or dispersion diluted to a mass fraction of solids of about 10 %).

In a case where the acid number of the polyester **A** alone is already in excess of 20 mg/g, a condensation reaction with the polyurethane is not always needed, simply mixing the polyester **A** with the polyurethane **B** suffices for water dispersibility. However, if long shelf life such as in excess of three months, and good stone chip resistance are desired, it is advisable to increase the molar mass of the binder resin by a condensation step.

The general procedure to formulate a binder dispersion comprises to charge a mass fraction of from 80 % to 60 %, based on the mass of the resulting binder dispersion, of the condensation product **AB,** to heat this charge to from 100 °C to 120 °C, and to intimately mix this with a mass fraction of from 20 % to 40 % of a crosslinker, such as a commercially available multifunctional isocyanate capped with butanonoxime (®Desmodur N 3300, Bayer Material Science AG), and then neutralising at least 50 % of the acid groups remaining by addition of dimethylethanolamine. The mixture thus obtained is then diluted by addition of desalinated water to a viscosity of less or about 2000 mPa·s measured at 23 °C. This usually corresponds to a mass fraction of solids in the aqueous dispersion of from 35 % to 45 %.

It is also possible to make a binder dispersion without premature admixing of a crosslinker, by neutralising the condensation products and diluting the neutralised condensation products with water to the desired viscosity. In this case, a crosslinker is added later when making the paint (in the usual way by adding pigments, fillers, additives and preservatives, etc.), preferably a water-reducible amino resin (e.g., a melamine formaldehyde resin) or a water-soluble capped multifunctional isocyanate.

Experience has shown that in those cases where the acid number of the polyester **A** had been less than 20 mg/g, it had been difficult to reproducibly reach and exceed the desired minimum acid number of 30 mg/g for the condensation product **AB.** This had led to problems in the storage stability of binder resin dispersions and also paints based on such condensation products, particularly in combination with water-insoluble capped isocyanate crosslinkers. Therefore, every effort has been made to have an acid number of from 20 mg/g to 40 mg/g for the polyester **A** to ensure that the desired range for the acid number of the condensation product **AB** of from 30 mg/g to 50 mg/g is always reached.

**Table 3 Preparation of Condensation Resins AB**

| Binder Resin | Polyester A mass fraction in % \| Designation | Polyurethane B mass fraction in % \| Designation | Condensation Product AB Acid Number in mg/g \| Staudinger Index in cm³/g | Crosslinker mass fraction in % \| Designation | Viscosity at 23 °C in mPa·s | mass fraction of solids in % | Storage Stability* | mass fraction of aromatic moieties in % |
|---|---|---|---|---|---|---|---|---|
| BM 1 | 80 \| Aa | 20 \| Ba | 36 \| 12.8 | 43 \| H 1 | 1530 | 38.5 | OK | 7.1 |
| BM 2 | 70 \| Ab | 20 \| Bb | 32 \| 15.3 | 25 \| H 1 | 710 | 40.9 | OK | 6.9 |
| BM 3 | 75 \| Ac | 25 \| Ba | 43 \| 13.8 | 25 \| H 2 | 1205 | 44.3 | OK | 0 |
| BM 4 | 70\| Ae | 30\| Bc | 31 \| 11.8 | 25 \| H 2 | 364 | 42.5 | OK | 6.4 |
| BM 5 | 75 \| Ad | 25 \| Bd | 34 \| 13.2 | 34 \| H 1 | 1446 | 43.5 | OK | 0 |
| BM 6 | 75 \| Af | 25 \| Bb | 36 \| 14.8 | none | 1241 | 42 | OK | 0 |
| BM 7 | 80 \| Ac | 20 \| Ba | 35 \| 13.6 | none | 806 | 44.8 | OK | 0 |
| BM 8 | 80 \| Ad | 20 \| Bd | 45 \| 13.3 | none | 577 | 41.2 | OK | 0 |

| Comparative Examples: | | | | | | | | |
|---|---|---|---|---|---|---|---|---|
| VB 1 | 70 \| PE 1 | 30 \| PU 1 | 37 \| 16.0 | 54 \| H 1 | 320 | 35 | OK | 40.4 |
| VB 2 | 77 \| PE 2 | 23 \| PU 2 | 35 \| 15.8 | 43 \| H 2 | 270 | 34 | OK | 37.4 |
| BM 9 | 80 \| Ag | 20 \| Bd | 28 \| 13.5 | none | 407 | 39.3 | slight settling | 0 |
| BM 10 | 75 \| Ag | 25 \| Bd | 23 \| 13.4 | 34 \| H 1 | 298 | 40.5 | strong settling | 0 |

| | | | | | | | | |
|---|---|---|---|---|---|---|---|---|
| *: measured on 10 % strength solution in water | | | | | | | | |

Comparative Examples:
PE 1: is the polyester component B2 of EP 0 594 685 B1, amount-of-substance fraction of aromatic educts is 34.8 %
PE 2: is the polyester component B4 of EP 0 594 685 B1, amount-of-substance fraction of aromatic educts is 32.5 %

PU 1: is the polyurethane component A2 of EP 0 594 685 B1, amount-of-substance fraction of aromatic educts is 53.3 %
PU 2: is the polyurethane component A1 of EP 0 594 685 B1, amount-of-substance fraction of aromatic educts is 53.8 %

VB 1: corresponds to Example 2 of table 2 of EP 0 594 685 B1
VB 2: corresponds to Example 4 of table 2 of EP 0 594 685 B1

H1: commercial polyfunctional trimeric hexamethylene diisocyanate having an isocyanurate structure capped with butanone oxime (®Desmodur N 3390, Bayer Materials Science)
H2: commercial polyfunctional trimeric hexamethylene diisocyanate having a biuret structure (®Desmodur N 100, Bayer Materials Science)

### Example 4 Test of the binders in filler-surfacer paints for automotive applications

Aqueous filler-surfacer paints have been made from the binders of table 3 according to the formulations of table 4:

**Table 4 Paint Compositions (masses of all components in g)**

| | Paint 1 | Paint 2 | Paint 3 | Paint 4 | Paint 5 | Paint 6 | Paint 7 | Paint 8 | Paint | Paint 10 |
|---|---|---|---|---|---|---|---|---|---|---|
| BM 1 | 109.1 | | | | | | | | | |
| BM 2 | | 102.7 | | | | | | | | |
| BM 3 | | | 94.8 | | | | | | | |
| BM 4 | | | | 98.8 | | | | | | |
| BM 5 | | | | | 96.5 | | | | | |
| BM 6* | | | | | | 100 | | | | |
| BM 7* | | | | | | | 93.75 | | | |
| BM 8* | | | | | | | | 101.9 | | |
| VB1 | | | | | | | | | 120 | |
| VB2 | | | | | | | | | | 123.5 |
| Wetting Agent | | | | | | | | | | |
| (Surfynol 104E) | 1.2 | 1.2 | 1.2 | 1.2 | 1.2 | 1.2 | 1.2 | 1.2 | 1.2 | 1.2 |
| Deionised Water 1 | 9 | 7 | 8 | 5 | 8 | 9 | 5 | 6 | 5 | 5 |
| Pigment (Ti02, | | | | | | | | | | |
| ®Kronos 2190) | 60 | 60 | 60 | 60 | 60 | 60 | 60 | 60 | 60 | 60 |
| Filler + | 60 | 60 | 60 | 60 | 60 | 60 | 60 | 60 | 60 | 60 |
| BM 1 | 202.6 | | | | | | | | | |
| BM 2 | | 190.7 | | | | | | | | |
| BM 3 | | | 176 | | | | | | | |
| BM 4 | | | | 183.5 | | | | | | |
| BM 5 | | | | | 179.3 | | | | | |
| BM 6* | | | | | | 128.6 | | | | |
| BM 7* | | | | | | | 120.5 | | | |
| BM 8 * | | | | | | | | 131.1 | | |
| VB1 | | | | | | | | | 222.8 | |
| VB2 | | | | | | | | | | 229.4 |
| Curing Agent § | | | | | | 24 | 24 | 24 | | |
| Deionised Water 2 | 14 | 10 | 12 | 8 | 13 | 9 | 7 | 9 | 8 | 7 |
| Mass of Paint | | | | | | | | | | |
| in g | 455.9 | 431.6 | 412 | 416.5 | 418 | 391.8 | 371.5 | 393.2 | 477 | 486.1 |

| | | | | | | | | | | |
|---|---|---|---|---|---|---|---|---|---|---|
| * no curing agent § Aminoplast Curing Agent (Hexamethoxymethyl-Melamine Type) + Filler (Barium Sulphate; average particle size 1 µm) | | | | | | | | | | |

Using the formulations of table 4, pigmented pastes were at first produced in the usual way charging the binders, wetting agent, deionised water (1), pigment and filler, and homogenising the mixture thus obtained in a bead mill, and then completing the paint by adding more binder, curing agent, and portion (2) of deionised water. This latter portion of water was chosen to obtain a viscosity of the final paint of approximately 120 mPa·s. Paints 1 to 10 were applied using a 150 µm doctor blade on clean glass plates and were dried after an initial flash off during fifteen minutes as follows:
- for twenty minutes at 165 °C (stoving procedure 1, denoted as ⁽¹⁾ in table 5)
- for thirty minutes at 190 °C (stoving procedure 2, denoted as ⁽²⁾ in table 5).

The coatings thus obtained were tested for pendulum hardness and gloss, the paint films were also judged by visual inspection.

The results of the paint testing are summarised in Table 5:

| Paint | Pendulum Hardness in s ⁽¹⁾ | Pendulum Hardness in s ⁽²⁾ | Gloss ⁽¹⁾ | Gloss ⁽²⁾ |
|---|---|---|---|---|
| 1 | 97 | 105 | 90 | 83 |
| 2 | 98 | 105 | 90 | 86 |
| 3 | 101 | 110 | 91 | 91 |
| 4 | 97 | 106 | 91 | 87 |
| 5 | 105 | 113 | 91 | 91 |
| 6 | 100 | 107 | 90 | 90 |
| 7 | 98 | 105 | 92 | 92 |
| 8 | 102 | 110 | 90 | 90 |
| 9 | 86 | 111 | 91 | 82 |
| 10 | 83 | 115 | 92 | 83 |

All filler coating compositions yield cured coating films having surface free from defects and had dry film thicknesses of 35 µm ± 0.5 µm. For paints 1, 2 and 4, there was a slight loss in gloss if the paint films were exposed to higher temperatures, or for longer times. This was most marked in paint 1 having the highest aromatic content. Coating films made from paints 1 to 8 according to the invention already developed better hardness at the lower stoving temperature (condition ⁽¹⁾). Gloss values did not change in the coating films made with binders according to the invention for different stoving conditions 1 and 2 with no aromatic content (paints 3 and 5 to 8), while gloss was reduced markedly in the systems using the comparative filler binders 9 and 10 when stoving was made at the higher temperature ⁽²⁾.

In a further comparative test, test metal sheets were subjected to a stone chip resistance test. Commercial bonder steel sheets (Bonder 26 60 OC) were coated with (dry thickness in all cases) 25 µm of a commercial CED coating (the same in all cases), a 35 µm layer of the aqueous filler of paints 1 to 10, and a 40 µm layer of a commercial acrylic, melamine resin crosslinked top coat (the same in all cases). Stoving conditions for these layers were:

| | |
|---|---|
| CED | thirty minutes, 175 °C |
| Filler, condition 1 | twenty minutes, 165 °C |
| Filler, condition 2 | thirty minutes, 190 °C |
| top coat | thirty minutes, 140 °C |

After the last stoving step, the coated bonder sheets were stored in standard climate (DIN EN 23270, temperature (23 ± 2) °C, relative humidity (50 ± 5) %) for twenty-four hours, and then subjected to a stone chip test according to DIN 55 996-1 (ISO 20577-2:2005) with two runs of 0.5 kg of edged stone grit at an air pressure of 2 bar (0.2 MPa) at the same standard climate conditions. The results are listed below in Table 6:

**Table 6 Results of the Stone Chip Test**

| | Paint No. from Table 4 | Stoving Condition | Stone Chip Test Rating according to DIN 55996-1 Standard |
|---|---|---|---|
| Test Steel Sheet 1 | 1 | 1 | 0 to 1 |
| Test Steel Sheet 2 | 1 | 2 | 1 |
| Test Steel Sheet 3 | 2 | 1 | 1 |
| Test Steel Sheet 4 | 2 | 2 | 1 |
| Test Steel Sheet 5 | 3 | 1 | 1 |
| Test Steel Sheet 6 | 3 | 2 | 1 |
| Test Steel Sheet 7 | 4 | 1 | 0 to 1 |
| Test Steel Sheet 8 | 4 | 2 | 0 to 1 |
| Test Steel Sheet 9 | 5 | 1 | 0 to 1 |
| Test Steel Sheet 10 | 5 | 2 | 1 |
| Test Steel Sheet 11 | 6 | 1 | 0 to 1 |
| Test Steel Sheet 12 | 6 | 2 | 1 |
| Test Steel Sheet 13 | 7 | 1 | 1 |
| Test Steel Sheet 14 | 7 | 2 | 1to 2 |
| Test Steel Sheet 15 | 8 | 1 | 1 |
| Test Steel Sheet 16 | 8 | 2 | 1 to 2 |
| Test Steel Sheet 17 | 9 | 1 | 1 |
| Test Steel Sheet 18 | 9 | 2 | 4 to 5 |
| Test Steel Sheet 19 | 10 | 1 | 0 to 1 |
| Test Steel Sheet 20 | 10 | 2 | 3 to 4 |

Test sheets 17 and 18 were made with binder VB 1 (corresponding to Example 2 of table 2 of EP 0 594 685 B1), and sheets 19 and 20 with binder VB 2 (corresponding to Example 4 of table 2 of EP 0 594 685 B1). These comparative test sheets showed a marked dependence in stone chip resistance upon the curing temperature: while at the lower temperature, the observed stone chip resistance was on par with those measured with the binders of the invention, exposure to higher temperature gave unsatisfactory results. This shows clearly the advantage brought about by the invention.

## Claims

1. Water-borne coating binders **ABC** comprising a mixture of a curing agent **C** selected from the group consisting of capped isocyanates **C1** based on aliphatic isocyanates, and aminoplast curing agents **C2,** and a reaction product **AB** made by at least partial esterification of a hydroxyl group-containing polyester **A** and an acid groups-containing polyurethane **B,** wherein the polyesters **A** are made by polyesterification of aliphatic linear branched or cyclic alcohols **A1** which are at least difunctional, and of aliphatic linear branched or cyclic carboxylic acids **A2** which are at least difunctional, wherein the amounts of **A1** and **A2** subjected to polyesterification are chosen in a way that the sum ***n***(OH) of the amounts of substance of alcoholic hydroxyl groups in **A1** and the sum ***n***(H) of the amounts of substance of acidic hydrogen groups in the acids **A2** are in a ratio ***n***(OH) : ***n***(H) of from 1.08 to 1.01, and wherein the polyurethanes **B** are made by polyaddition of isocyanate-functional compounds **B1** having an average isocyanate functionality of more than one, and of hydroxy functional compounds **B2** having an average hydroxyl functionality of more than 1, and wherein at least a mass fraction of 20 % of the compounds **B2** are such compounds **B21** which have at least one acid group that is less reactive towards isocyanate groups than the hydroxyl groups of the said compounds **B21, characterised in that** each of **A** and **B** comprise not more than 20 % of the amount of substance of their educts **A1, A2, B1,** and **B2,** of molecules comprising aromatic structures.

2. The water-borne coating binders of claim 1 wherein the polyester **A** has a hydroxyl number of from 100 mg/g to 500 mg/g, and an acid number of from 15 mg/g to 50 mg/g.

3. The water-borne coating binders of claim 1 wherein the polyurethane **B** has an acid number of from 50 mg/g to 180 mg/g.

4. The water-borne coating binders of claim 1 wherein the alcohols **A1** are selected from the group consisting of aliphatic linear branched or cyclic alcohols having two hydroxyl groups and from 2 to 10 carbon atoms.

5. The water-borne coating binders of claim 1 wherein the carboxylic acids **A2** are selected from the group consisting of aliphatic linear branched or cyclic dicarboxylic acids having from 3 to 10 carbon atoms.

6. The water-borne coating binders of claim 1 wherein in the condensation of the polyesters **A,** linear, branched or cyclic hydroxycarboxylic acids **A12** are also used, selected from the group consisting of hydroxyacetic acid, 2-hydroxypropionic acid, 3-hydroxypropionic acid, 4-hydroxybutyric acid, 5-hydroxyvaleric acid, 6-hydroxycaproic acid, their chain-branched methylated and ethylated homologues, and 2-, 3- and 4-hydroxymethyl cyclohexanecarboxylic acids.

7. The water-borne coating binders of claim 1 wherein in the synthesis of the polyurethane **B,** the compounds **B21** are dihydroxycarboxylic acids having from 4 to 12 carbon atoms and one or two carboxylic acid groups.

8. The water-borne coating binders of claim 7 wherein the compounds **B21** are selected from the group consisting of dimethylol acetic acid, dimethylol propionic acid, and dimethylol butyric acid.

9. The water-borne coating binders of claim 1 wherein the isocyanate-functional compounds **B1** are selected from the group consisting of tetramethylene-1,4-diisocyanate, hexamethylene-1,6-diisocyanate, 1,4-diisocyanatocycloxane, bis-(4-isocyanatocyclohexyl)-methane, isophorone diisocyanate, bis(4-isocyanatocyclohexyl)methane, and bis(4-isocyanatomethyl)cyclohexane.

10. A process to make the water-borne coating binders of claim 1 wherein in separate reactions,
- a hydroxyl group-containing polyester **A** is prepared by polyesterification of aliphatic linear branched or cyclic alcohols **A1** which are at least difunctional, and of aliphatic linear branched or cyclic carboxylic acids **A2** which are at least difunctional, wherein the amounts of **A1** and **A2** subjected to polyesterification are chosen in a way that the sum ***n***(OH) of the amounts of substance of alcoholic hydroxyl groups in **A1** and the sum ***n***(H) of the amounts of substance of acidic hydrogen groups in the acids **A2** are in a ratio ***n***(OH) : ***n***(H) of from 1.08 to 1.01, and
- an acid groups-containing polyurethane **B** is made by polyaddition of isocyanate-functional compounds **B1** having an average isocyanate functionality of more than one, and of hydroxy functional compounds **B2** having an average hydroxyl functionality of more than 1, and wherein at least a mass fraction of 20 % of the compounds **B2** are such compounds **B21** which have at least one acid group that is less reactive towards isocyanate groups than the hydroxyl groups of the said compounds **B21,**
and in a further step, the hydroxyl group-containing polyester **A** and the acid groups-containing polyurethane **B** are subjected to a condensation step under esterifying conditions.

11. The process of claim 10 wherein the esterification reaction is conducted until the reaction product **AB** has an acid number of from 30 mg/g to 50 mg/g.

12. A method of use of the water-borne coating binders of claim 1 to prepare a primer-surface coating composition comprising mixing the condensation products **AB** with a curing agent **C** selected from the group consisting of capped aliphatic isocyanates and aminoplast curing agents, neutralising the resulting mixture, adding thereto at least one of fillers, wetting agents, and pigments, homogenising this mixture, and completing the coating composition by addition of further binder of claim 1, and water.
